# EUROPEAN PATENT APPLICATION

(11) **EP 4 116 376 A1**
(43) Date of publication of application: **11.01.2023**
(21) Application number: 21886500.4
(22) Date of filing: 06.08.2021
(51) Int. Cl.: C08L 55/02, C08L 25/12, C08K 5/5313, C08K 5/521

(54) **RESIN COMPOSITION AND MOLDED PRODUCT**

(30) Priority: 27.10.2020 KR 20200139933
(71) Applicant: Lg Chem, Ltd., Seoul 07336 (KR)
(72) Inventor: YANG, Hee Seung, Daejeon 34122 (KR); NAM, Ki Young, Daejeon 34122 (KR); YOO, Je Sun, Daejeon 34122 (KR); SIM, Jae Young, Daejeon 34122 (KR); BAE, Seon Hyeong, Daejeon 34122 (KR)
(74) Representative: Goddar, Heinz J.
(86) International application number: PCT/KR2021/010372
(87) International publication number: WO 2022/092501

(57) **Abstract**

Provided is a resin composition including 25 to 50 parts by weight of a phosphorus-based flame retardant composition, with respect to 100 parts by weight of a base resin including a graft copolymer containing a rubber polymer, and a styrene-based copolymer, wherein the phosphorus-based flame retardant composition includes 30 wt% to 70 wt% of Mⁿ⁺(diethylphosphinate)⁻ₙ (M is a metal having an oxidation number of 2 to 5, and n is an integer selected from 2 to 5) and 30 wt% to 70 wt% of ammonium polyphosphate.

## Description

### [TECHNICAL FIELD]

### Cross-reference to Related Applications

This application claims the benefit of Korean Patent Application No. 10-2020-0139933, filed on October 27, 2020, in the Korean Intellectual Property Office, the disclosure of which is incorporated herein in its entirety by reference.

### Technical Field

The present invention relates to a resin composition, and more particularly, to a flame retardant resin composition enabling self-charring without containing a charring agent, and a molded article formed therefrom.

### BACKGROUND ART

Acrylonitrile-butadiene-styrene (ABS) copolymers are prepared by graft-copolymerizing styrene and acrylonitrile onto butadiene rubber polymers. ABS copolymers are superior in impact resistance, chemical resistance, thermal stability, coloring properties, fatigue resistance, rigidity, and processability to conventional high-impact polystyrene (HIPS), and thus used in interior and exterior materials for vehicles, office equipment, parts for various electrical/electronic products, or toys.

Meanwhile, resins used in areas exposed to fire risks need to meet flame retardant standards required in the areas. However, ABS copolymers are not flame retardant themselves, and thus, there have been proposals for methods of mixing flame retardants with ABS copolymers to ensure safety against fire by meeting the flame retardant standards.

In this case, halogen-based flame retardants, phosphorus-based flame retardants, nitrogen-based flame retardants, and hydroxide-based flame retardants may be used as the flame retardants, and among these flame retardants, the halogen-based flame retardants are beneficial in that the flame retardants provide high flame retardant efficiency and maintain the mechanical properties of resins, but the halogen-based flame retardants have limitations in that the flame retardants are decomposed upon processing and cause halogen gas, which is highly hazardous to human health and the environment. Accordingly, recently there has been a growing need for no halogen-containing, that is, halogen-free flame retardant resins.

Against this backdrop, it is suggested to use not halogen-based flame retardants, but non-halogen-based flame retardants such as phosphorus-based flame retardants, nitrogen-based flame retardants, and hydroxide-based flame retardants, in particular, phosphorus-based flame retardants, and these phosphorus-based flame retardants impart flame retardancy through gas phase reactions by phosphate, and solid phase reactions by formation of char such as C-P-O(N).

Although resins having a carbon main backbone, such as polycarbonate resins, easily form char through phosphorus-based flame retardants, making the phosphorus-based flame retardants easy to be applicable, but ABS copolymers alone are not able to form char through phosphorus-based flame retardants, thereby requiring charring agents. However, the charring agents are high-priced to have reduced price competitiveness, thereby causing a decrease in productivity.

### [Related Art Document]

### [Patent Document]

(Patent Document 1) KR10-1411825B1

### DISCLOSURE OF THE INVENTION

### TECHNICAL PROBLEM

The present invention has been devised to overcome limitations of the related art, and in a flame retardant resin composition including a graft copolymer such as an ABS copolymer, there is provided a resin composition capable of both ensuring flame retardancy and thermal stability without adding a charring agent by applying a phosphorus-based flame retardant composition enabling self-charring through a flame retardant.

In addition, the present invention provides a molded article molded from the resin composition.

### TECHNICAL SOLUTION

To solve the tasks, the present invention provides a resin composition including 25 to 50 parts by weight of a phosphorus-based flame retardant composition, with respect to 100 parts by weight of a base resin including a graft copolymer containing a rubber polymer, and a styrene-based copolymer, wherein the phosphorus-based flame retardant composition includes 30 wt% to 70 wt% of Mⁿ⁺(diethylphosphinate)⁻ₙ (M is a metal having an oxidation number of 2 to 5, and n is an integer selected from 2 to 5) and 30 wt% to 70 wt% of ammonium polyphosphate.

In addition, the present invention provides a molded article molded from the resin composition.

### ADVANTAGEOUS EFFECTS

A resin composition according to the present invention enables self-charring from a phosphorus-based flame retardant composition, and thus contains no charring agents but has excellent flame retardancy and thermal stability.

### BRIEF DESCRIPTION OF THE DRAWINGS

FIG. 1 is an image of aluminum diethylphosphinate particles in which M is aluminum (Al) in Mⁿ⁺(diethylphosphinate)⁻ₙ according to an embodiment of the present invention, taken using a scanning electron microscope.
FIG. 2 is an image of ammonium polyphosphate particles according to an embodiment of the present invention, taken using a scanning electron microscope.
FIG. 3 is an image of a surface after burning a resin composition according to Example 2 of the present invention, taken using a scanning electron microscope.
FIG. 4 is a graph schematically showing the tendency of flame retardancy according to the amounts of phosphorus-based flame retardant compositions according to Examples 1 to 3 and Comparative Example 1 of the present invention.
FIG. 5 is a graph schematically showing the tendency of flame retardancy according to the composition of phosphorus-based flame retardant compositions according to Example 2 and Comparative Examples 2 to 5 of the present invention.

### BEST MODE FOR CARRYING OUT THE INVENTION

Hereinafter, the present invention will be described in detail to aid in understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The term "monomer unit" as used herein may refer to a component, a structure, or a material itself resulting from each monomer, and specifically, may refer to a repeating unit constituted in a polymer when monomers to be added participate in a polymerization reaction upon polymerizing the polymer.

The term "composition," as used herein includes reaction products and decomposition products formed from materials of the composition as well as a mixture of materials including the composition.

The present invention provides a resin composition, specifically, a flame retardant resin composition.

According to an embodiment of the present invention, the resin composition may include 25 to 50 parts by weight of a phosphorus-based flame retardant composition, with respect to 100 parts by weight of a base resin including a graft copolymer containing a rubber polymer and a styrene-based copolymer, wherein the phosphorus-based flame retardant composition may include 30 wt% to 70 wt% of Mⁿ⁺(diethylphosphinate)⁻ₙ (M is a metal having an oxidation number of 2 to 5, and n is an integer selected from 2 to 5) and 30 wt% to 70 wt% of ammonium polyphosphate.

According to an embodiment of the present invention, the graft copolymer may be part of the base resin of the resin composition, and may be a resin for imparting basic physical properties to the resin composition.

According to an embodiment of the present invention, the graft copolymer may include a rubber polymer, an aromatic vinyl-based monomer unit, and a vinyl cyan-based monomer unit. As a specific example, the rubber polymer may be a conjugated diene-based polymer, and the conjugated diene-based polymer may be prepared through polymerization of a conjugated diene-based monomer to include a conjugated diene-based monomer unit, and as a more specific example, the conjugated diene-based polymer may be prepared through emulsion polymerization of a conjugated diene-based monomer, making it easy to control an average particle size of the conjugated diene-based polymer in this case, and a conjugated diene-based polymer suitable for desired mechanical properties may thus be used.

According to an embodiment of the present invention, a conjugated diene-based monomer for forming a conjugated diene-based monomer unit of the conjugated diene-based polymer may be at least one selected from the group consisting of 1,3-butadiene, 2,3-dimethyl-1,3-butadiene, piperylene, 3-butyl-1,3-octadiene, isoprene, and 2-phenyl-1,3-butadiene, and more specifically, may be 1,3-butadiene.

According to an embodiment of the present invention, the graft copolymer may result from graft polymerization of an aromatic vinyl-based monomer unit and a vinyl cyan-based monomer unit onto a rubber polymer. Accordingly, the graft copolymer may include the rubber polymer, and the aromatic vinylic monomer unit and the vinyl cyan-based monomer unit grafted onto the rubber polymer, and may include both an aromatic vinyl-based monomer unit and a vinyl cyan-based monomer unit that are not grafted onto the rubber polymer in a portion where a graft layer of the graft copolymer is formed according to graft polymerization conditions. In this case, the graft polymerization may be performed through emulsion polymerization or bulk polymerization.

According to an embodiment of the present invention, an aromatic vinyl-based monomer for forming an aromatic vinyl-based monomer unit of the graft copolymer may be at least one selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene, and 1-vinyl-5-hexylnaphthalene, and as a specific example, may be styrene.

According to an embodiment of the present invention, a vinyl cyan-based monomer for forming a vinyl cyan-based monomer unit of the graft copolymer may be at least one selected from the group consisting of acrylonitrile, methacrylonitrile, ethacrylonitrile, phenylacrylonitrile, and α-chloroacrylonitrile, and as a specific example, may be acrylonitrile.

According to an embodiment of the present invention, the graft copolymer may include 40 wt% to 90 wt% of a rubber polymer, 5 wt% to 50 wt% of an aromatic vinyl-based monomer unit, and 1 wt% to 30 wt% of a vinyl cyan-based monomer unit, and, as a specific example, may include 50 wt% to 80 wt% or 50 wt% to 70 wt% of a rubber polymer, 10 wt% to 40 wt% or 10 wt% to 30 wt% of an aromatic vinyl-based monomer unit, and 1 wt% to 20 wt% or 5 wt% to 15 wt% of a vinyl cyan-based monomer unit, and within this range, the mechanical properties of the resin composition are possibly secured.

According to an embodiment of the present invention, the styrene-based copolymer may be part of the base resin of the resin composition, and may be a matrix resin.

According to an embodiment of the present invention, the styrene-based copolymer may include an aromatic vinyl-based monomer unit and a vinyl cyan-based monomer unit, and, as a specific example, may be prepared through emulsion polymerization or bulk polymerization of an aromatic vinyl-based monomer and a vinyl cyan-based monomer.

According to an embodiment of the present invention, an aromatic vinyl-based monomer for forming an aromatic vinyl-based monomer unit of the styrene-based copolymer may be at least one selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene, and 1-vinyl-5-hexylnaphthalene, and as a specific example, may be styrene.

According to an embodiment of the present invention, a vinyl cyan-based monomer for forming a vinyl cyan-based monomer unit of the styrene-based copolymer may be at least one selected from the group consisting of acrylonitrile, methacrylonitrile, ethacrylonitrile, phenylacrylonitrile, and α-chloroacrylonitrile, and as a specific example, may be acrylonitrile.

According to an embodiment of the present invention, the styrene-based copolymer may include 10 wt% to 90 wt% of an aromatic vinyl-based monomer unit and 10 wt% to 90 wt% of a vinyl cyan-based monomer unit, and as a specific example thereof, may include 20 wt% to 80 wt% or 30 wt% to 70 wt% of an aromatic vinyl-based monomer unit and 20 wt% to 80 wt% or 30 wt% to 70 wt% of a vinyl cyan-based monomer unit, and within this range, the graft copolymer has excellent dispersibility, and thus have excellent mechanical properties and physical property balance.

According to an embodiment of the present invention, the base resin may include 10 wt% to 50 wt% of a graft copolymer and 50 wt% to 90 wt% of a styrene-based copolymer, and as a specific example, may include 10 wt% to 40 wt% or 20 wt% to 40 wt% of a graft copolymer and 60 wt% to 90 wt% or 60 wt% to 80 wt% of a styrene-based copolymer, and within this range, the base resin provide excellent mechanical properties. In addition, the graft copolymer and the styrene-based copolymer each include an aromatic vinyl-based monomer unit and a vinyl cyan-based monomer unit, and when the types of the aromatic vinyl-based monomer unit and the vinyl cyan-based monomer unit forming each copolymer are the same, the units are mixed and dispersed as the same component in an extrusion process of a resin composition, and thus in an actual resin composition and a molded article molded therefrom, a rubber polymer may be present in a dispersed form in a matrix formed of the aromatic vinyl-based monomer unit and the vinyl cyan-based monomer unit. Therefore, the amount of each of the graft copolymer and the styrene-based copolymer in the base resin may be identified from a total amount of the aromatic vinyl-based monomer unit and the vinyl cyan-based monomer unit, and the amount of the rubber polymer in the base resin.

As described above, unlike the graft copolymer and the styrene-based copolymer according to the present invention, a resin having a carbon main backbone, such as a polycarbonate resin, easily forms char through a phosphorus-based flame retardant, making the phosphorus-based flame retardant easy to be applicable, but for the graft copolymer according to the present invention, the graft copolymer alone is not able to form char through a phosphorus-based flame retardant, thereby requiring a charring agent. However, the addition of a charring agent may deteriorate the thermal stability of the graft copolymer, and particularly, the charring agent is high-priced to have reduced price competitiveness, causing a decrease in productivity.

Meanwhile, the base resin according to the present invention is designed not to require a charring agent, particularly a carbon-based charring agent. Accordingly, the base resin may further include an additional resin component for imparting other properties as needed, in addition to the graft copolymer and the styrene-based copolymer, but in this case, the additional resin component does not indicate a carbon-based charring agent.

According to an embodiment of the present invention, in a resin that is not able to directly form char through a phosphorus-based flame retardant, such as the base resin, the phosphorus-based flame retardant composition may enable charring for the base resin without adding a charring agent, particularly a carbon-based charring agent, thereby imparting flame retardancy.

According to an embodiment of the present invention, the phosphorus-based flame retardant composition may include Mⁿ⁺(diethylphosphinate)⁻ₙ (M is a metal having an oxidation number of 2 to 5, and n is an integer selected from 2 to 5) and ammonium polyphosphate. It is known that, in this case, Mⁿ⁺(diethylphosphinate)⁻ₙ above (M is a metal having an oxidation number of 2 to 5, and n is an integer selected from 2 to 5) may be used as one type of phosphorus-based flame retardant, and also the ammonium polyphosphate may be used as one type of flame retardant synergist or flame retardant aid. However, in the related art, forming char is not achievable using a graft copolymer and/or a styrene-based copolymer together with a phosphorus-based flame retardant, and thus, in order to substantially apply a phosphorus-based flame retardant to a base resin including a graft copolymer, particularly an ABS copolymer as in the present invention, as described above, it was required to include a carbon-based charring agent such as a polyester resin or the like, which is capable of forming char with a phosphorus-based flame retardant. In addition, even when both the carbon-based charring agent and the phosphorus-based flame retardant are included, char is not sufficiently formed depending on the type of carbon-based charring agent and phosphorus-based flame retardant, thereby failing to obtain flame retardancy, and accordingly, using a flame-retardant synergist or a flame retardant aid has been suggested, but even in such a case, when a charring agent, a phosphorus-based flame retardant, and a flame retardant synergist are not suitably induced in combination, char is not easily formed, and thus, flame retardancy is not achieved.

On the other hand, a phosphorus-based flame retardant composition according to the present invention satisfies a predetermined composition in a resin composition with respect to a base resin, and when included in a predetermined amount, self-charring is achievable and when exposed to flames or fire, thereby imparting flame retardancy to the resin composition. That is, a resin composition of the present invention including the phosphorus-based flame retardant composition according to the present invention may form char without adding a charring agent when exposed to flames or fire. As a specific example, when the resin composition is exposed to flames or fire, polyphosphate derived from ammonium polyphosphate of the phosphorus-based flame retardant composition, and metal ions (Mⁿ⁺) derived from Mⁿ⁺(diethylphosphinate)⁻ₙ may form metallosupramolecular.

As a more specific example, when M is aluminum (Al), metallosupramolecular may be formed through a reaction as in Scheme 1 below, and in this case, the formed metallosupramolecular may be char.

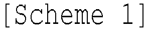

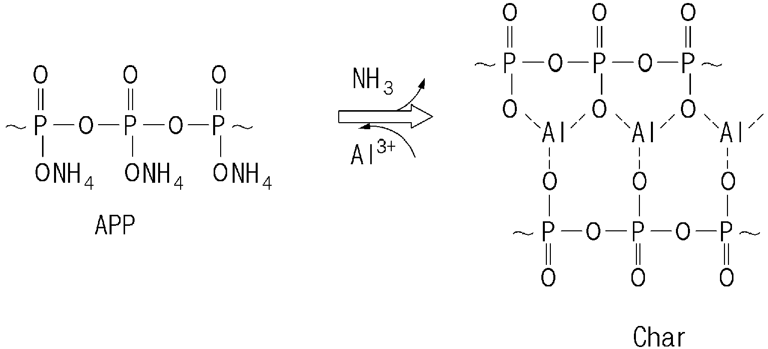

In this case, according to an embodiment of the present invention, in order to form metallosupramolecular through the reaction as in Scheme 1, it is important to control the composition of Mⁿ⁺(diethylphosphinate)⁻ₙ (M is a metal having an oxidation number of 2 to 5, and n is an integer selected from 2 to 5) and ammonium polyphosphate. According to an embodiment of the present invention, the phosphorus-based flame retardant composition may include 30 wt% to 70 wt% of Mⁿ⁺(diethylphosphinate)⁻ₙ (M is a metal having an oxidation number of 2 to 5, and n is an integer selected from 2 to 5), and 30 wt% to 70 wt% of ammonium polyphosphate, and as a specific example, may include 40 wt% to 60 wt% or 45 wt% to 55 wt% of Mⁿ⁺(diethylphosphinate)⁻ₙ (M is a metal having an oxidation number of 2 to 5, and n is an integer selected from 2 to 5) and 40 wt% to 60 wt% or 45 wt% to 55 wt% of ammonium polyphosphate, and when the resin composition is exposed to flames or fire within this range, flame retardancy through self-charring is achievable at a maximum level.

In addition, even when the metallosupramolecular is formed through the reaction as in Scheme 1, if an absolute amount of metallosupramolecular is not sufficiently secured, the base resin is not entirely covered even with the formed char, and accordingly, flame retardancy is not achievable, and thus, securing the absolute amount of the phosphorus-based flame retardant composition itself is critical. Accordingly, the resin composition according to the present invention may include 25 to 50 parts by weight, 25 to 45 parts by weight, or 28 to 40 parts by weight of the phosphorus-based flame retardant composition, with respect to 100 parts by weight of the base resin, and within this range, deterioration in mechanical properties of the resin composition may be prevented, and flame retardancy may be achieved at a maximum level.

According to an embodiment of the present invention, Mⁿ⁺(diethylphosphinate)⁻ₙ above (M is a metal having an oxidation number of 2 to 5, and n is an integer selected from 2 to 5) is a phosphorus-based flame retardant that may include metal ions having an oxidation number of 2 to 5. In this case, when the metal ions are monovalent, the reaction as in Scheme 1 is not induced when the resin composition is exposed to flames or fire, and thus the metal ions are required to be metal ions having at least an oxidation number of 2.

According to an embodiment of the present invention, M above may be a metal having an oxidation number of 2 to 5, and specifically, may be a white metal having an oxidation number of 2 to 5, and more specifically, may be at least one selected from the group consisting of zinc (Zn), tin (Sn), calcium (Ca), magnesium (Mg), aluminum (Al), scandium (Sc), cerium (Ce), zirconium (Zr), hafnium (Hf), antimony (Sb), and tantalum (Ta).

According to an embodiment of the present invention, the higher the oxidation number of the metal, the more the reaction between the metal ions and ammonium polyphosphate as shown in Scheme 1, making self-charring easy, and accordingly, M above may be a metal having an oxidation number of 3 to 5, specifically, may be a white metal having an oxidation number of 3 to 5, and more specifically, may be at least one selected from the group consisting of tin (Sn), aluminum (Al), scandium (Sc), cerium (Ce), zirconium (Zr), hafnium (Hf), antimony (Sb), and tantalum (Ta).

According to an embodiment of the present invention, the resin composition may include the base resin and the phosphorus-based flame retardant composition, and thus have a flame retardant rating of V-1 or higher according to UL-94 V Test. In this case, in the flame retardancy test by UL-94 V Test, specimens are directly exposed to flames, and thus, even when the resin composition has the same composition, the thinner the specimens, the harder to ensure flame retardancy, and the thicker the specimens, the greater the flame retardancy. Accordingly, in order for the resin composition to sufficiently secure flame retardancy, flame retardancy needs to be high even at a thin state, and according to an embodiment of the present invention, the resin composition may have a flame retardant rating of V-1 or higher at a thickness of 1.5 mm according to UL-94 V Test. In this case, "V-1 or higher" indicates that ratings of V-0 and V-1 are included.

According to an embodiment of the present invention, the resin composition may have a flame retardant rating of V-0 at a thickness of 2.0 mm, 2.5 mm, and 3.0 mm according to UL-94 V Test.

In addition, the present invention provides a molded article molded from the resin composition.

According to an embodiment of the present invention, the molded article may be extruded and injection molded from the resin composition, and may be applied to product groups requiring both mechanical properties and flame retardancy, and specific examples may be interior and exterior materials for vehicles, office equipment, and parts for various electrical/electronic products.

Hereinafter, embodiments of the present invention will be described in detail to make sure that those skilled in the art easily implement the present invention. However, the present invention may be modified into other various forms, and is not limited to the embodiments described herein.

### Examples and Comparative Examples

The following components in an amount indicated in Tables 1 and 2 were mixed with a lubricant and a stabilizer to prepare a resin composition.
(1) Base resin: ABS resin (DP270 from LG Chem) as a graft copolymer and SAN resin (90HR from LG Chem) as a styrene-based copolymer were mixed in the amounts indicated in the tables.
(2-1) Mⁿ⁺(diethylphosphinate)⁻ₙ: Aluminum diethylphosphinate (Al DEP), OP1240 from Clariant
(2-2) Mⁿ⁺(diethylphosphinate)⁻ₙ: Zinc diethylphosphinate (Zn DEP), OP950 from Clariant
(3) Ammonium polyphosphate (APP): APP from LS Chem

### Experimental examples

Resin compositions prepared in Examples and Comparative Examples were extruded at 220 °C using a twinscrew extruder to prepare pellets, and then specimens were injected at 210 °C, and flame retardancy and heat deflection temperature were measured through the following method and are shown in Table 1.

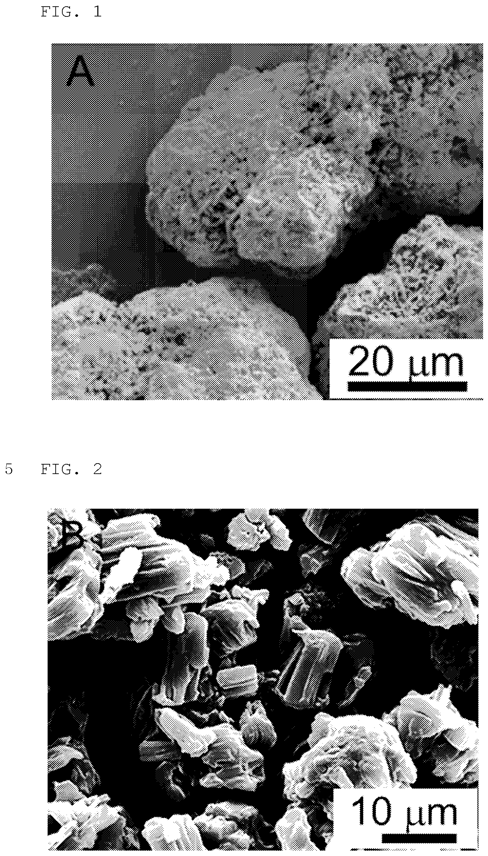

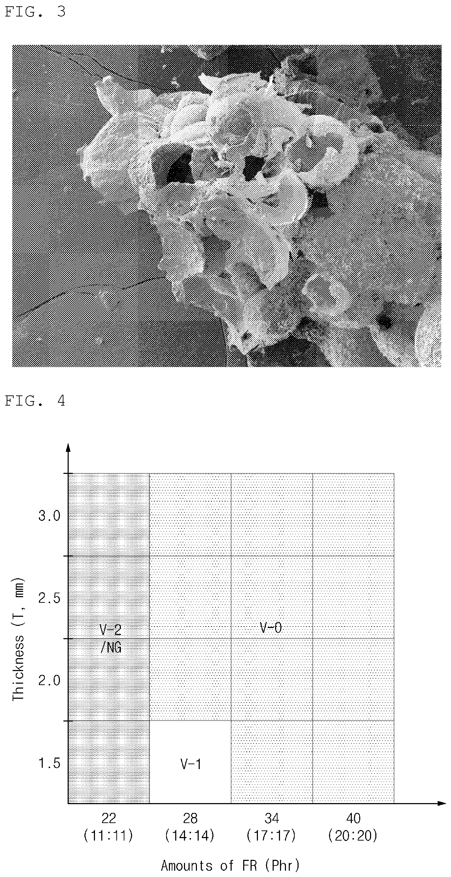

In addition, particles of aluminum diethylphosphinate in a phosphorus-based flame retardant composition blended in the resin composition were taken using a scanning electron microscope and are shown in FIG. 1; particles of ammonium polyphosphate were taken using with a scanning electron microscope and are shown in FIG. 2; a surface of the resin composition according to Example 2 after burning was taken using a scanning electron microscope and is shown in FIG 3; and results of element analysis of a surface of the resin composition according to Example 2 after burning, using EDS (Energy Dispersive X-ray Spectroscopy) are shown in Table 2 below.

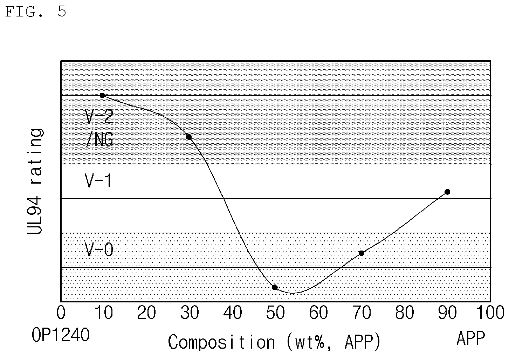

* Flame retardancy (UL-94 V Test, Vertical Burning Test): for specimens having a thickness of 1.5 mm, 2.0 mm, 2.5 mm, and 3.0 mm, according to standard measurement UL-94, ratings for each specimen by thickness were divided into V-0, V-1 and V-2 and indicated, and the tendency of flame retardancy according to the amounts and composition of the phosphorus-based flame retardant compositions are schematically shown in FIGS. 4 and 5.

*Heat Deflection Temperature (°C): for specimens of 5 inch X 1/2 inch X 1/4 inch, according to ASTM D648, conditions were set to a core load of 1.82 MPa and a heating temperature of 2 °C/min in oil bath to measure temperatures at which the specimens were deflected by 0.01 inch.

**[Table 1]**

| Item | | Examples | | | Comparative Examples | | | | |
|---|---|---|---|---|---|---|---|---|---|
| | | 1 | 2 | 3 | 1 | 2 | 3 | 4 | 5 |
| Graft copolymer | (Part s by weigh t) | 30 | 30 | 30 | 30 | 30 | 30 | 30 | 30 |
| Styrene-based copolymer | (Part s by weigh t) | 70 | 70 | 70 | 70 | 70 | 70 | 70 | 70 |
| Al DEP | (Part s by weigh t) | 14 | 17 | 20 | 11 | 3 | 10 | 24 | 31 |
| APP | (Part s by weigh t) | 14 | 17 | 20 | 11 | 31 | 24 | 10 | 3 |
| Flame retardancy (Thickness) | 1.5 mm | V-1 | V-0 | V-0 | NG | NG | NG | NG | NG |
| | 2.0 mm | V-0 | V-0 | V-0 | V-2 | V-2 | V-2 | V-0 | V-1 |
| | 2.5 mm | V-0 | V-0 | V-0 | V-2 | V-2 | V-1 | V-0 | V-1 |
| | 3.0 mm | V-0 | V-0 | V-0 | V-1 | V-1 | V-1 | V-0 | V-0 |
| Heat deflection temperature | (°C) | 87. 4 | 88. 3 | 88. 9 | 86. 6 | 84. 0 | 86. 1 | 88. 7 | 90. 2 |

**[Table 2]**

| Element | Weight% | Atomic% |
|---|---|---|
| C | 62.63 | 72.56 |
| O: | 25.72 | 22.37 |
| Al | 1.37 | 0.71 |
| P | 10.28 | 4.36 |
| Totals | 100.00 | 100.00 |

As shown in Table 1 above, it was confirmed that, for a base resin including a graft copolymer and a styrene-based copolymer, the resin composition according to the present invention enabled self-charring only through the composition of a phosphorus-based flame retardant composition including a phosphorus-based flame retardant without adding a carbon-based charring agent (see FIGS. 1 to 3), thereby ensuring a flame retardant rating of V-1 or higher, that is, V-1 and V-0 even at a thickness of 1.5 mm according to UL-94 V Test. In particular, it was confirmed that when the thicknesses of the resin composition specimens increased to 2.0 mm, 2.5 mm, and 3.0 mm, it was easier to secure flame retardancy, and thus V-0 was secured for all of Examples. It is considered that when the resin composition according to the present invention was exposed to flames or fire, polyphosphate derived from ammonium polyphosphate and metal ions (Mⁿ⁺) derived from Mⁿ⁺(diethylphosphinate)⁻ₙ formed metallosupramolecular (see FIG. 3 and Table 2), and thus such flame retardancy was achieved.

In addition, it was confirmed that when the amount of Mⁿ⁺(diethylphosphinate)⁻ₙ included in the phosphorus-based flame retardant composition increased, the thermal deflection temperature of the resin composition rose, thereby improving thermal stability. This is, it is considered that in a resin composition including a graft copolymer as a thermoplastic resin, that is, an ABS resin, thermal stability is a property determined by the ABS resin, which is a graft copolymer of a base resin, and a SAN resin, which is a styrene-based copolymer, but the thermal stability results from the thermal property improvements obtained when the metal ions Mⁿ⁺ of Mⁿ⁺(diethylphosphinate)⁻ₙ react with the graft copolymer by heat applied to the resin composition in an extrusion process.

Meanwhile, it was confirmed that in Comparative Example 1 where the composition of the phosphorus-based flame retardant composition is satisfied but the amount is not sufficient, self-charring is not sufficiently done, and thus flame retardancy was not secured at a thickness of 1.5 mm, and only V-1 was secured at a thickness of 3.0 mm at best even when the thickness of the specimen was increased (see FIG. 4).

In addition, it was confirmed that in Comparative Examples 2 to 5 where the composition of the phosphorus-based flame retardant composition is apart from the composition defined in the present invention even with the sufficient amount of the phosphorus-based flame retardant composition, when the resin composition is exposed to flames or fire, the ratio for forming metallosupramolecular from Mⁿ⁺(diethylphosphinate)⁻ₙ and ammonium polyphosphate was not secured, and accordingly, self-charring was not sufficiently done, and thus flame retardancy was not achieved at a thickness of 1.5 mm, and flame retardancy was achieved only at least at a thickness of 2.0 mm.

These results confirmed that the resin composition according to the present invention enables self-charring from the phosphorus-based flame retardant composition, and thus has excellent flame retardancy and thermal stability without adding a charring agent.

## Claims

1. A resin composition comprising:
25 to 50 parts by weight of a phosphorus-based flame retardant composition, with respect to 100 parts by weight of a base resin including a graft copolymer containing a rubber polymer, and a styrene-based copolymer,
wherein the phosphorus-based flame retardant composition includes 30 wt% to 70 wt% of Mⁿ⁺(diethylphosphinate)⁻ₙ (M is a metal having an oxidation number of 2 to 5, and n is an integer selected from 2 to 5) and 30 wt% to 70 wt% of ammonium polyphosphate.

2. The resin composition of claim 1, wherein the graft copolymer comprises a rubber polymer, an aromatic vinyl-based monomer unit, and a vinyl cyan-based monomer unit.

3. The resin composition of claim 1, wherein the styrene-based copolymer comprises an aromatic vinyl-based monomer unit and a vinyl cyan-based monomer unit.

4. The resin composition of claim 1, wherein the resin composition comprises 28 to 40 parts by weight of a phosphorus-based flame retardant composition, with respect to 100 parts by weight of the base resin.

5. The resin composition of claim 1, wherein the phosphorus-based flame retardant composition comprises 40 wt% to 60 wt% of Mⁿ⁺(diethylphosphinate)⁻ₙ (M is a metal having an oxidation number of 2 to 5, and n is an integer selected from 2 to 5) and 40 wt% to 60 wt% of ammonium polyphosphate.

6. The resin composition of claim 1, wherein M above is at least one selected from the group consisting of zinc (Zn), tin (Sn), calcium (Ca), magnesium (Mg), aluminum (Al), scandium (Sc), cerium (Ce), zirconium (Zr), hafnium (Hf), antimony (Sb), and tantalum (Ta).

7. The resin composition of claim 1, wherein M above is at least one selected from the group consisting of tin (Sn), aluminum (Al), scandium (Sc), cerium (Ce), zirconium (Zr), hafnium (Hf), antimony (Sb), and tantalum (Ta).

8. The resin composition of claim 1, wherein the resin composition forms char without containing carbon-based charring agents when exposed to flames or fire.

9. The resin composition of claim 1, wherein when the resin composition is exposed to flames or fire, polyphosphate derived from ammonium polyphosphate and metal ions (Mⁿ⁺) derived from Mⁿ⁺(diethylphosphinate)⁻ₙ form metallosupramolecular.

10. The resin composition of claim 1, wherein the resin composition has a flame retardant rating of V-1 or higher at a thickness of 1.5 mm according to UL-94 V Test.

11. A molded article molded from the resin composition according to any one of claims 1 to 10.
